# EUROPEAN PATENT SPECIFICATION

(11) **EP 2 831 837 B1**
(45) Date of publication and mention of the grant of the patent: **14.03.2018**
(21) Application number: 13768922.0
(22) Date of filing: 26.03.2013
(51) Int. Cl.: G06T 1/00, G06T 3/00, G06T 15/50

(54) **LOW POWER CENTROID DETERMINATION AND TEXTURE FOOTPRINT OPTIMIZATION FOR DECOUPLED SAMPLING BASED RENDERING PIPELINES**
NIEDRIGLEISTUNGSSCHWERPUNKTERMITTLUNG UND TEXTURFUSSABDRUCKOPTIMIERUNG FÜR ENTKOPPELTE ABTASTUNGSBASIERTE RENDERING-PIPELINES
DÉTERMINATION DE CENTROÏDE BASSE PUISSANCE ET OPTIMISATION D'EMPREINTE DE TEXTURE POUR PIPELINES DE RENDU FAISANT APPEL À UN ÉCHANTILLONNAGE DÉCOUPLÉ

(30) Priority: 28.03.2012 US 201261616558 P; 21.08.2012 US 201213590490
(43) Date of publication of application: 04.02.2015
(73) Proprietor: Intel Corporation, Santa Clara, CA 95054 (US)
(72) Inventor: VAIDYANATHAN, Karthik, Berkeley, California 94705 (US); SALVI, Marco, San Francisco, California 94117 (US); TOTH, Robert M., S-22647 Lund M (SE); LEFOHN, Aaron, Bothell, Washington 98011 (US)
(74) Representative: Goddar, Heinz J.
(86) International application number: PCT/US2013/033931
(87) International publication number: WO 2013/148720

(56) References cited:
- US-A- 6 160 557
- US-A1- 2003 117 409
- US-A1- 2004 246 251
- US-A1- 2006 077 209
- US-A1- 2006 139 358
- US-A1- 2010 188 404
- US-B1- 6 313 840
- XIAO Y ET AL: "CONSTRAINING GLOBAL INTERPOLATION METHODS FOR SPARSE DATA VOLUME VISUALIZATION", INTERNATIONAL JOURNAL OF COMPUTERS & APPLICATIONS, ACTA PRESS, ANAHEIM, CA, US, vol. 21, no. 2, 1 January 1999 (1999-01-01), pages 56-64, XP000875737, ISSN: 1206-212X
- QI ZANG AND REINHARD KLETTE: "OBJECT CLASSIFICATION AND TRACKING IN VIDEO SURVEILLANCE. CITR TECHNICAL REPORT, no. 128", INTERNET CITATION, 2003, XP007901109, Retrieved from the Internet: URL:http://www.citr.auckland.ac.nz/techrep orts/2003/CITR-TR-128.pdf [retrieved on 2006-09-15]

## Description

### Background

This relates to graphics processing.

A decoupled sampling technique for shading decouples shading from visibility sampling in graphics pipelines. It reduces the shading rate while rendering camera effects, like motion and defocus blur, with stochastic rasterization. In a rendering pipeline based on decoupled sampling, all visibility samples are mapped to a two-dimensional (2D) shading space using a projective transform. This mapping function can map a large number of samples to the same neighborhood in shading space, thus enabling the reuse of color values.

Color is reused by means of a memorization cache that stores previous shader outputs. For every sample that is covered by a primitive, a lookup is performed in the memorization cache. If the mapped shading point for that sample is already stored in the cache, the color value from that cache entry is simply reused. This avoids triggering another shader execution for the sample, thereby reducing the costs of shading.

A limitation of this approach is that the shading points are not guaranteed to always be located inside the primitive that is being shaded, which can ultimately cause rendering artifacts and therefore impact image quality.

In "Constraining Global Interpolation Methods For Sparse Data Volume Visualization" by Xiao Y and Woodbury C, International Journal of Computers & Application, 21(2), 1999, methods for constraining global interpolation in sparse data volumes for visualization are disclosed. Point constraints, value constraints and local constraints are proposed to handle sparse data volume visualization. Furthermore, information that is not explicitly carried by the sample data is added to guide the global interpolation in order to avoid misrepresenting the sample data.

US 2003/117409 A1 discloses an approach for calculating a centroid of a fragment to be rendered, wherein the sampling point of a pixel is moved from its initial center point to the center of the fragment. This is accomplished by receiving a coverage mask containing sample points of the pixel fragment and determining which of the sample points are within the fragment. Furthermore, a value representative of the number of sample points that are within the frame is determined and offset values of the fragment centroid are determined based on the number of sample points within the fragment.

US 2006/077209 A1 refers to pixel center position displacement, wherein a pixel center position that is not covered by a primitive covering a portion of the pixel is displaced to lie within a fragment formed by the intersection of the primitive and the pixel.

### Brief Description Of The Drawings

Some embodiments are described with respect to the following figures:
Figure 1 is a depiction of a bounding box and a primitive showing centroid and sample locations according to one embodiment;
Figure 1A is a depiction of a scaled texture footprint according to one embodiment;
Figure 2 is a flow chart for one embodiment;
Figure 3 is a system depiction for one embodiment; and
Figure 4 is a front elevational view for one embodiment.

### Detailed Description

High quality images may be generated with a rendering pipeline based on decoupled sampling by generating non-extrapolated shading locations and by determining improved texture filtering footprints. In a decoupled sampling pipeline, typically the shading points lie on a regular grid i.e. the shading points lie at the center of a pixel. Since the locations of the shading points are constrained by the grid, they can lie outside a primitive. In such cases, the shading parameters, such as texture coordinates, are extrapolated outside the primitive. This can produce artifacts. For example when a texture coordinate gets extrapolated outside the primitive, it might end up sampling across texture seams.

In the case of centroid sampling, the shading points lie inside the primitive. Therefore this problem does not arise.

A low power method computes shading locations generated (within a small error margin) to be inside the shaded primitive. Furthermore using this approach, one can provide, at little extra cost, improved texture filtering footprints that can further increase image quality in some embodiments. A low power mechanism for sampling inside the primitive, using an approximate centroid of the covered samples, is applicable to decoupled sampling pipelines. Furthermore this mechanism can improve texture filter footprints in some embodiments. (So centroid sampling here is different than centroid sampling used in Direct3D).

In a decoupled shading rendering pipeline, when the rasterizer determines that one or more samples are covered by a triangle, it sends them to a mapping unit. The mapping unit applies a mapping function to the samples and transforms them to a 2D shading space. This 2D space is discretized into unit sized cells to form a shading grid. Four adjacent 2x2 cell regions in the shading space are called shading quads.

Shading may always performed at the center of each of the four cells in a shading quad. However these shading points are not guaranteed to be inside the primitive. This can lead to various artifacts resulting from extrapolation of shading parameters (position, texture coordinates, etc.) outside the primitive boundary, such as sampling across texture seams in a texture atlas (i.e. a larger image containing smaller sub-images) or computing incorrect specular reflections. Ideally in such cases shading should be performed at the centroid of the intersection of the primitive and the cell.

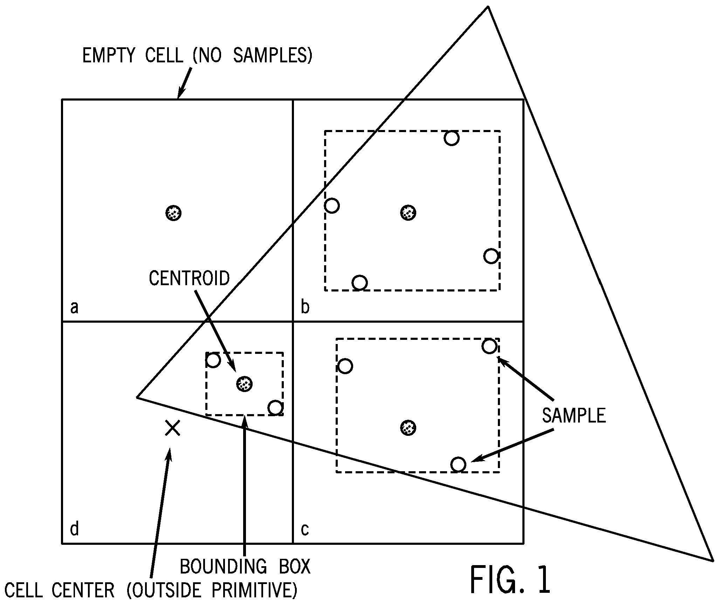

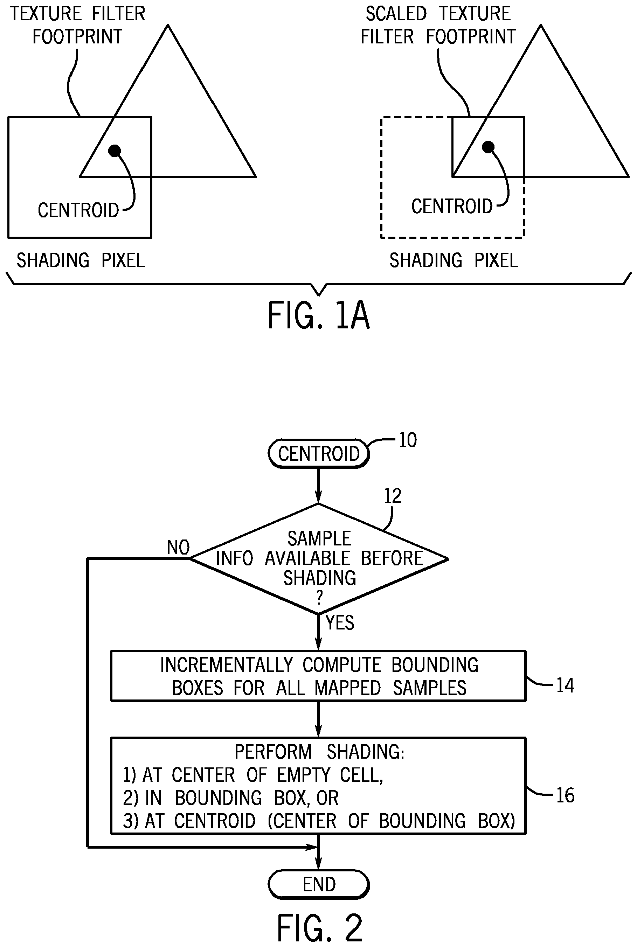

If information about mapped samples is made available before shading, it is possible to determine an approximation of the centroid of the primitive (e.g. a triangle), on the fly as samples are mapped to the shading space. First a bounding box is computed that bounds all the mapped samples. Then shading is performed either at the center of the cell if the cell is empty (see Figure 1, cell a) or if the center of the cell is contained in the bounding box (cells b and c), or at a new location, called the centroid, given by the center of the bounding box (cell d). The bounding box can be computed incrementally with each sample that is mapped.

A bounding box or volume for a set of samples is a closed volume that completely contains the union of the samples. Since the bounding box is computed over all sample points mapped to a cell, the size of the bounding box is always smaller than or equal to the size of the cell. The precision of the bounding box dimensions can therefore be determined based on the size of the shading cell.

In order to construct a bounding box for a shading cell, only the relative positions of the samples within the cell are needed. These relative positions are simply the fractional part of the samples' shading space coordinates. Since this is a bounded quantity, the relative positions can be represented in fixed point precision. There is no strict requirement to perform these computations at high precision. A limited number of bits may be used for the fractional part of the sample's coordinates (i.e. 8 bits or less), which makes it possible to greatly reduce area and power requirements compared to an implementation based on floating point calculations.

The newly computed centroid may be located exactly at the center of the cell if the bounding box includes it or it will be located inside the boundary of the shaded primitive with a margin of error inversely proportional to the number of bits used to represent the fractional part of the discretized 2D shading space. In the vast majority of cases, the centroid will be contained inside the primitive, improving image quality in some embodiments.

Though centroid sampling ensures that shading points are inside the primitive, the texture filter footprint might still extend across texture seams resulting in rendering artifacts. Depending on the size of the bounding box computed over the samples that map to a shading quad, we can scale the texture filter footprint may be sealed to reduce such artifacts. At primitive (e.g. triangle) boundaries, as shown in Figure 1A, fewer samples map to a shading point resulting in a smaller bounding box. This reduces the scale of the filter footprint and therefore reduces filtering across texture seams.

The bounding box gives an estimate of what portion of a pixel in a shading quad is covered by a primitive. If a pixel is entirely covered the size of the bounding box will be approximately a unit square (as indicated in Figure 1A). If a pixel is not entirely covered by a primitive, the bounding box is likely to be smaller. Therefore, if the texture filter footprint is scaled, as shown on the right in Figure 1A, depending on the size of the bounding box, the chances of the texture filter footprint going outside the primitive can be reduced. This reduces filtering across texture seams in some embodiments.

Referring to Figure 2, a sequence 10 for determining approximate centroids may be implemented in software, firmware and/or hardware. In software and firmware embodiments it may be implemented by computer executed instructions stored in one or more non-transitory computer readable media such as a magnetic, optical and/or semiconductor storage.

The sequence may begin by determining whether sampling information is available before shading as indicated at 12. If so, the bounding boxes may be incrementally computed for all mapped samples as indicated in block 14. Then in block 16 shading is performed. Specifically shading is performed at the center of an empty cell. It is performed in a bounding box or at the centroid or center of a bounding box in other cases.

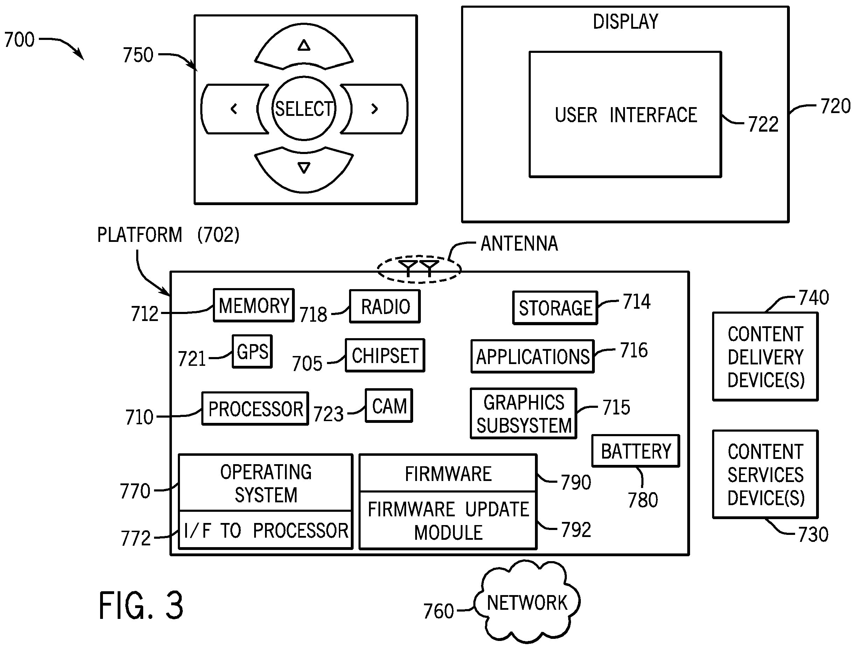

Figure 3 illustrates an embodiment of a system 700. In embodiments, system 700 may be a media system although system 700 is not limited to this context. For example, system 700 may be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

In embodiments, system 700 comprises a platform 702 coupled to a display 720. Platform 702 may receive content from a content device such as content services device(s) 730 or content delivery device(s) 740 or other similar content sources. A navigation controller 750 comprising one or more navigation features may be used to interact with, for example, platform 702 and/or display 720. Each of these components is described in more detail below.

In embodiments, platform 702 may comprise any combination of a chipset 705, processor 710, memory 712, storage 714, graphics subsystem 715, applications 716, global positioning system (GPS) 721, camera 723 and/or radio 718. Chipset 705 may provide intercommunication among processor 710, memory 712, storage 714, graphics subsystem 715, applications 716 and/or radio 718. For example, chipset 705 may include a storage adapter (not depicted) capable of providing intercommunication with storage 714.

In addition, the platform 702 may include an operating system 770. An interface to the processor 772 may interface the operating system and the processor 710.

Firmware 790 may be provided to implement functions such as the boot sequence. An update module to enable the firmware to be updated from outside the platform 702 may be provided. For example the update module may include code to determine whether the attempt to update is authentic and to identify the latest update of the firmware 790 to facilitate the determination of when updates are needed.

In some embodiments, the platform 702 may be powered by an external power supply. In some cases, the platform 702 may also include an internal battery 780 which acts as a power source in embodiments that do not adapt to external power supply or in embodiments that allow either battery sourced power or external sourced power.

The sequence shown in Figure 2 may be implemented in software and firmware embodiments by incorporating them within the storage 714 or within memory within the processor 710 or the graphics subsystem 715 to mention a few examples. The graphics subsystem 715 may include the graphics processing unit and the processor 710 may be a central processing unit in one embodiment.

Processor 710 may be implemented as Complex Instruction Set Computer (CISC) or Reduced Instruction Set Computer (RISC) processors, x86 instruction set compatible processors, multi-core, or any other microprocessor or central processing unit (CPU). In embodiments, processor 710 may comprise dual-core processor(s), dual-core mobile processor(s), and so forth.

Memory 712 may be implemented as a volatile memory device such as, but not limited to, a Random Access Memory (RAM), Dynamic Random Access Memory (DRAM), or Static RAM (SRAM).

Storage 714 may be implemented as a non-volatile storage device such as, but not limited to, a magnetic disk drive, optical disk drive, tape drive, an internal storage device, an attached storage device, flash memory, battery backed-up SDRAM (synchronous DRAM), and/or a network accessible storage device. In embodiments, storage 714 may comprise technology to increase the storage performance enhanced protection for valuable digital media when multiple hard drives are included, for example.

Graphics subsystem 715 may perform processing of images such as still or video for display. Graphics subsystem 715 may be a graphics processing unit (GPU) or a visual processing unit (VPU), for example. An analog or digital interface may be used to communicatively couple graphics subsystem 715 and display 720. For example, the interface may be any of a High-Definition Multimedia Interface, DisplayPort, wireless HDMI, and/or wireless HD compliant techniques. Graphics subsystem 715 could be integrated into processor 710 or chipset 705. Graphics subsystem 715 could be a stand-alone card communicatively coupled to chipset 705.

The graphics and/or video processing techniques described herein may be implemented in various hardware architectures. For example, graphics and/or video functionality may be integrated within a chipset. Alternatively, a discrete graphics and/or video processor may be used. As still another embodiment, the graphics and/or video functions may be implemented by a general purpose processor, including a multi-core processor. In a further embodiment, the functions may be implemented in a consumer electronics device.

Radio 718 may include one or more radios capable of transmitting and receiving signals using various suitable wireless communications techniques. Such techniques may involve communications across one or more wireless networks. Exemplary wireless networks include (but are not limited to) wireless local area networks (WLANs), wireless personal area networks (WPANs), wireless metropolitan area network (WMANs), cellular networks, and satellite networks. In communicating across such networks, radio 718 may operate in accordance with one or more applicable standards in any version.

In embodiments, display 720 may comprise any television type monitor or display. Display 720 may comprise, for example, a computer display screen, touch screen display, video monitor, television-like device, and/or a television. Display 720 may be digital and/or analog. In embodiments, display 720 may be a holographic display. Also, display 720 may be a transparent surface that may receive a visual projection. Such projections may convey various forms of information, images, and/or objects. For example, such projections may be a visual overlay for a mobile augmented reality (MAR) application. Under the control of one or more software applications 716, platform 702 may display user interface 722 on display 720.

In embodiments, content services device(s) 730 may be hosted by any national, international and/or independent service and thus accessible to platform 702 via the Internet, for example. Content services device(s) 730 may be coupled to platform 702 and/or to display 720. Platform 702 and/or content services device(s) 730 may be coupled to a network 760 to communicate (e.g., send and/or receive) media information to and from network 760. Content delivery device(s) 740 also may be coupled to platform 702 and/or to display 720.

In embodiments, content services device(s) 730 may comprise a cable television box, personal computer, network, telephone, Internet enabled devices or appliance capable of delivering digital information and/or content, and any other similar device capable of unidirectionally or bidirectionally communicating content between content providers and platform 702 and/display 720, via network 760 or directly. It will be appreciated that the content may be communicated unidirectionally and/or bidirectionally to and from any one of the components in system 700 and a content provider via network 760. Examples of content may include any media information including, for example, video, music, medical and gaming information, and so forth.

Content services device(s) 730 receives content such as cable television programming including media information, digital information, and/or other content. Examples of content providers may include any cable or satellite television or radio or Internet content providers. The provided examples are not meant to limit embodiments of the invention.

In embodiments, platform 702 may receive control signals from navigation controller 750 having one or more navigation features. The navigation features of controller 750 may be used to interact with user interface 722, for example. In embodiments, navigation controller 750 may be a pointing device that may be a computer hardware component (specifically human interface device) that allows a user to input spatial (e.g., continuous and multi-dimensional) data into a computer. Many systems such as graphical user interfaces (GUI), and televisions and monitors allow the user to control and provide data to the computer or television using physical gestures.

Movements of the navigation features of controller 750 may be echoed on a display (e.g., display 720) by movements of a pointer, cursor, focus ring, or other visual indicators displayed on the display. For example, under the control of software applications 716, the navigation features located on navigation controller 750 may be mapped to virtual navigation features displayed on user interface 722, for example. In embodiments, controller 750 may not be a separate component but integrated into platform 702 and/or display 720. Embodiments, however, are not limited to the elements or in the context shown or described herein.

In embodiments, drivers (not shown) may comprise technology to enable users to instantly turn on and off platform 702 like a television with the touch of a button after initial boot-up, when enabled, for example. Program logic may allow platform 702 to stream content to media adaptors or other content services device(s) 730 or content delivery device(s) 740 when the platform is turned "off." In addition, chip set 705 may comprise hardware and/or software support for 5.1 surround sound audio and/or high definition 7.1 surround sound audio, for example. Drivers may include a graphics driver for integrated graphics platforms. In embodiments, the graphics driver may comprise a peripheral component interconnect (PCI) Express graphics card.

In various embodiments, any one or more of the components shown in system 700 may be integrated. For example, platform 702 and content services device(s) 730 may be integrated, or platform 702 and content delivery device(s) 740 may be integrated, or platform 702, content services device(s) 730, and content delivery device(s) 740 may be integrated, for example. In various embodiments, platform 702 and display 720 may be an integrated unit. Display 720 and content service device(s) 730 may be integrated, or display 720 and content delivery device(s) 740 may be integrated, for example. These examples are not meant to limit the invention.

In various embodiments, system 700 may be implemented as a wireless system, a wired system, or a combination of both. When implemented as a wireless system, system 700 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 700 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and so forth. Examples of wired communications media may include a wire, cable, metal leads, printed circuit board (PCB), backplane, switch fabric, semiconductor material, twisted-pair wire, co-axial cable, fiber optics, and so forth.

Platform 702 may establish one or more logical or physical channels to communicate information. The information may include media information and control information. Media information may refer to any data representing content meant for a user. Examples of content may include, for example, data from a voice conversation, videoconference, streaming video, electronic mail ("email") message, voice mail message, alphanumeric symbols, graphics, image, video, text and so forth. Data from a voice conversation may be, for example, speech information, silence periods, background noise, comfort noise, tones and so forth. Control information may refer to any data representing commands, instructions or control words meant for an automated system. For example, control information may be used to route media information through a system, or instruct a node to process the media information in a predetermined manner. The embodiments, however, are not limited to the elements or in the context shown or described in Figure 3.

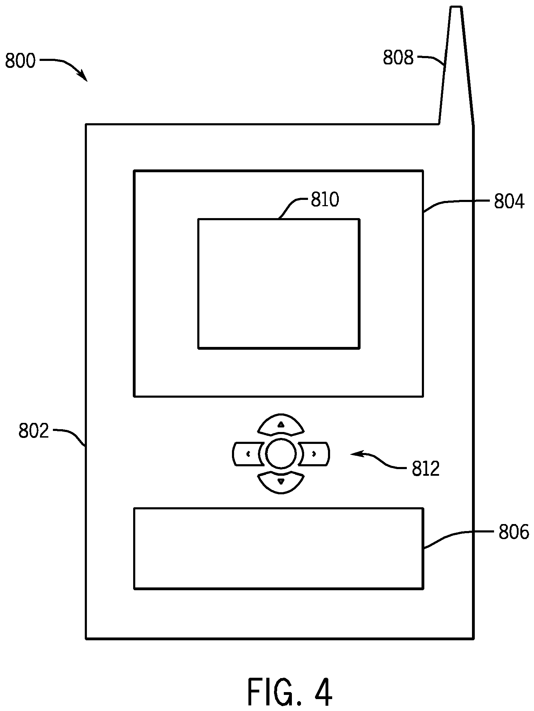

As described above, system 700 may be embodied in varying physical styles or form factors. Figure 4 illustrates embodiments of a small form factor device 800 in which system 700 may be embodied. In embodiments, for example, device 800 may be implemented as a mobile computing device having wireless capabilities. A mobile computing device may refer to any device having a processing system and a mobile power source or supply, such as one or more batteries, for example.

As described above, examples of a mobile computing device may include a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

Examples of a mobile computing device also may include computers that are arranged to be worn by a person, such as a wrist computer, finger computer, ring computer, eyeglass computer, belt-clip computer, arm-band computer, shoe computers, clothing computers, and other wearable computers. In embodiments, for example, a mobile computing device may be implemented as a smart phone capable of executing computer applications, as well as voice communications and/or data communications. Although some embodiments may be described with a mobile computing device implemented as a smart phone by way of example, it may be appreciated that other embodiments may be implemented using other wireless mobile computing devices as well. The embodiments are not limited in this context.

As shown in Figure 4, device 800 may comprise a housing 802, a display 804, an input/output (I/O) device 806, and an antenna 808. Device 800 also may comprise navigation features 812. Display 804 may comprise any suitable display unit for displaying information appropriate for a mobile computing device. I/O device 806 may comprise any suitable I/O device for entering information into a mobile computing device. Examples for I/O device 806 may include an alphanumeric keyboard, a numeric keypad, a touch pad, input keys, buttons, switches, rocker switches, microphones, speakers, voice recognition device and software, and so forth. Information also may be entered into device 800 by way of microphone. Such information may be digitized by a voice recognition device. The embodiments are not limited in this context.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

The graphics processing techniques described herein may be implemented in various hardware architectures. For example, graphics functionality may be integrated within a chipset. Alternatively, a discrete graphics processor may be used. As still another embodiment, the graphics functions may be implemented by a general purpose processor, including a multicore processor.

The foregoing description of one or more implementations provides illustration and description, but is not intended to be exhaustive or to limit the scope of the invention to the precise form disclosed. Modifications and variations are possible in light of the above teachings or may be acquired from practice of various implementations of the invention.

The graphics processing techniques described herein may be implemented in various hardware architectures. For example, graphics functionality may be integrated within a chipset. Alternatively, a discrete graphics processor may be used. As still another embodiment, the graphics functions may be implemented by a general purpose processor, including a multicore processor.

References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

While the present invention has been described with respect to a limited number of embodiments, those skilled in the art will appreciate numerous modifications and variations therefrom. It is intended that the appended claims define the scope of this present invention.

## Claims

1. A computer-implemented method comprising:
discretizing a two-dimensional shading space into unit sized cells to form a shading grid;
computing (14) a bounding box that bounds shading samples mapped to a cell of the shading grid, wherein the bounding box is incrementally computed with each sample that is mapped to the cell;
performing shading (16) at the center of the cell if the cell is empty or if the center of the cell is contained in the bounding box, and otherwise performing shading (16) at the center of the bounding box; and
depending on the size of the bounding box computed over the shading samples, scaling a texture filter footprint to reduce rendering artifacts.

2. The method of claim 1 including determining (12) whether sample information is available before shading (16).

3. The method of claim 1 including using relative positions of samples within a cell.

4. The method of claim 3 including determining the relative positions as a fractional part of a sample's shading space coordinates.

5. The method of claim 4 including using fixed point precision for said fractional part.

6. The method of claim 5 including using 8 bits or less for said fractional part.

7. An apparatus comprising:
a processor (710) to discretize a two-dimensional shading space into unit sized cells to form a shading grid, to generate a bounding box around shading samples mapped to a cell of the shading grid, wherein the bounding box is incrementally computed with each sample that is mapped to the cell, to shade at the center of the cell if the cell is empty or if the center of the cell is contained in the bounding box, and otherwise at the center of the bounding box, and to scale a texture filter footprint to reduce rendering artifacts, depending on the size of the bounding box computed over the shading samples; and
a memory (712) coupled to said processor.

8. The apparatus of claim 7 wherein said processor (710) is a graphics processing unit.

9. The apparatus of claim 7 including an operating system (770).

10. The apparatus of claim 7 including a battery (780).

11. The apparatus of claim 7 including firmware (790) and a module (792) to update said firmware.

12. Machine-readable storage including machine-readable instructions, which when executed, implement a method as claimed in one of the claims 1 to 6.

## Patentansprüche

1. Computerimplementiertes Verfahren, das Folgendes umfasst:
Diskretisieren eines zweidimensionalen Schattierungsraums in Zellen mit Einheitsgröße, um ein Schattierungsraster zu bilden;
Berechnen (14) eines Begrenzungsrahmens, der auf eine Zelle des Schattierungsrasters abgebildete Schattierungsabtastwerte begrenzt, wobei der Begrenzungsrahmen schrittweise mit jedem Abtastwert, der der Zelle zugeordnet ist, berechnet wird;
Durchführen einer Schattierung (16) im Zentrum der Zelle, wenn die Zelle leer ist oder wenn das Zentrum der Zelle in dem Begrenzungsrahmen enthalten ist, und andernfalls Durchführen einer Schattierung (16) im Zentrum des Begrenzungsrahmens; und
Skalieren eines Texturfilterfußabdrucks abhängig von der Größe des über die Schattierungsabtastwerte berechneten Begrenzungsrahmens, um Rendering-Artefakte zu reduzieren.

2. Verfahren nach Anspruch 1, das das Bestimmen (12), ob Abtastwertinformationen vor dem Schattieren verfügbar sind (16), umfasst.

3. Verfahren nach Anspruch 1, das das Verwenden relativer Abtastwertpositionen in einer Zelle umfasst.

4. Verfahren nach Anspruch 3, das das Bestimmen der relativen Positionen als einen Bruchteil der Schattierungsraumkoordinaten eines Abtastwerts umfasst.

5. Verfahren nach Anspruch 4, das das Verwenden von Festkommagenauigkeit für den Bruchteil umfasst.

6. Verfahren nach Anspruch 5, das das Verwenden von 8 Bits oder weniger für den Bruchteil enthält.

7. Vorrichtung, die Folgendes umfasst:
einen Prozessor (710), um einen zweidimensionalen Schattierungsraum in Zellen mit Einheitsgröße zu diskretisieren, um ein Schattierungsraster zu bilden, um einen Begrenzungsrahmen um Schattierungsabtastwerte, die auf eine Zelle des Schattierungsrasters abgebildet werden, zu erzeugen, wobei der Begrenzungsrahmen schrittweise mit jedem Abtastwert, der der Zelle zugeordnet ist, berechnet wird, um im Zentrum der Zelle, wenn die Zelle leer ist oder wenn das Zentrum der Zelle im Begrenzungsrahmen enthalten ist, zu schattieren und um andernfalls im Zentrum des Begrenzungsrahmens zu schattieren, und um einen Texturfilterfußabdruck abhängig von der Größe des über die Schattierungsabtastwerte berechneten Begrenzungsrahmens zu skalieren, um Rendering-Artefakte zu reduzieren; und
einen mit dem Prozessor verbundenen Speicher (712).

8. Vorrichtung nach Anspruch 7, wobei der Prozessor (710) eine Graphikverarbeitungseinheit ist.

9. Vorrichtung nach Anspruch 7, die ein Betriebssystem (770) enthält.

10. Vorrichtung nach Anspruch 7, die eine Batterie (780) enthält.

11. Vorrichtung nach Anspruch 7, die Firmware (790) und ein Modul (792), um diese Firmware zu aktualisieren, enthält.

12. Maschinenlesbarer Speicher, der maschinenlesbare Anweisungen enthält, die ein Verfahren nach einem der Ansprüche 1 bis 6 implementieren, wenn sie ausgeführt werden.

## Revendications

1. Procédé mis en oeuvre par ordinateur, comprenant les étapes suivantes :
discrétisation d'un espace d'ombrage bidimensionnel en cellules de taille unité dans le but de former une grille d'ombrage ;
calcul (14) d'une zone englobante qui englobe des échantillons d'ombrage mappés sur une cellule de la grille d'ombrage, la zone englobante étant calculée incrémentalement à partir de chaque échantillon qui est mappé sur la cellule ;
exécution d'un ombrage (16) au centre de la cellule si la cellule est vide ou si le centre de la cellule est contenu dans la zone englobante et, sinon, exécution d'un ombrage (16) au centre de la zone englobante ; et
en fonction de la taille de la zone englobante calculée sur les échantillons d'ombrage,
mise à l'échelle d'une empreinte de filtre de texture dans le but de réduire les artefacts de rendu.

2. Procédé selon la revendication 1, comportant l'étape de détermination (12) si des informations d'échantillons sont disponibles ou pas préalablement à l'ombrage (16).

3. Procédé selon la revendication 1, comportant l'étape d'utilisation de positions relatives d'échantillons au sein d'une cellule.

4. Procédé selon la revendication 3, comportant l'étape de détermination des positions relatives sous forme d'une partie fractionnaire des coordonnées d'un échantillon dans l'espace d'ombrage.

5. Procédé selon la revendication 4, comportant l'étape d'utilisation d'une précision en virgule fixe pour ladite partie fractionnaire.

6. Procédé selon la revendication 5, comportant l'étape d'utilisation de 8 bits ou moins pour ladite partie fractionnaire.

7. Appareil, comprenant :
un processeur (710) destiné à discrétiser un espace d'ombrage bidimensionnel en cellules de taille unité dans le but de former une grille d'ombrage, à générer une zone englobante autour d'échantillons d'ombrage mappés sur une cellule de la grille d'ombrage, la zone englobante étant calculée incrémentalement à partir de chaque échantillon qui est mappé sur la cellule, à exécuter un ombrage au centre de la cellule si la cellule est vide ou si le centre de la cellule est contenu dans la zone englobante et, sinon, au centre de la zone englobante, et à mettre à l'échelle une empreinte de filtre de texture dans le but de réduire les artefacts de rendu, en fonction de la taille de la zone englobante calculée sur les échantillons d'ombrage ; et
une mémoire (712) reliée audit processeur.

8. Appareil selon la revendication 7, dans lequel ledit processeur (710) est une unité de traitement graphique.

9. Appareil selon la revendication 7, comportant un système d'exploitation (770).

10. Appareil selon la revendication 7, comportant une pile (780).

11. Appareil selon la revendication 7, comportant un micrologiciel (790) et un module (792) destiné à mettre à jour ledit micrologiciel.

12. Stockage lisible par machine comportant des instructions lisibles par machine qui, une fois exécutées, mettent en oeuvre un procédé selon l'une des revendications 1 à 6.
